# EUROPÄISCHE PATENTSCHRIFT

(11) **EP 1 752 791 B1**
(45) Veröffentlichungstag und Bekanntmachung des Hinweises auf die Patenterteilung: **05.03.2008**
(21) Anmeldenummer: 05017443.2
(22) Anmeldetag: 11.08.2005
(51) Int. Cl.: G01S 13/88, H01Q 13/08, H01Q 9/04

(54) **Abstandsmessvorrichtung mit einer Mikrowellen-Antennenanordnung und Verfahren zu ihrer Herstellung**
Distance measurement system using a microwave antenna and method for its fabrication
Système de mesure de la distance avec une antenne micro-ondes et méthode de fabrication

(43) Veröffentlichungstag der Anmeldung: 14.02.2007
(73) Patentinhaber: Festo AG & Co., 73734 Esslingen (DE)
(72) Erfinder: Reininger, Thomas, 73249 Wernau (DE); Maier, Marcus, 70565 Stuttgart (DE)
(74) Vertreter: Bregenzer, Michael

(56) Entgegenhaltungen:
- DE-A1- 10 205 904
- DE-A1- 19 903 183
- FR-A- 820 721
- US-A- 3 375 474
- US-A1- 2005 140 557
- US-B1- 6 879 290
- FAYYAZ N ET AL: "DESIGN AND ANALYSIS OF A CIRCULAR PATCH ANTENNA ON A FINITE CONICALGROUND PLANE" IEEE ANTENNAS AND PROPAGATION SOCIETY INTERNATIONAL SYMPOSIUM 1996 DIGEST. BALTIMORE, JULY 21 - 26, 1996. HELD IN CONJUNCTION WITH THE USNC/URSI NATIONAL RADIO SCIENCE MEETING, NEW YORK, IEEE, US, Bd. VOL. 1, 21. Juli 1996 (1996-07-21), Seiten 680-683, XP000782172 ISBN: 0-7803-3217-2
- NUSSEIBEH F ET AL: "TRANSIENT RESPONSE OF A WIDE-ANGLE CONE WITH DIELECTRIC LOADING" RADIO SCIENCE, AMERICAN GEOPHYSICAL UNION, WASHINGTON, DC,, US, Bd. 31, Nr. 5, September 1996 (1996-09), Seiten 1047-1052, XP008052172 ISSN: 0048-6604

## Beschreibung

Die Erfindung betrifft eine Positionsmessvorrichtung zur Bestimmung eines Abstandes zwischen einem in einer Leitungsstruktur angeordneten Messobjekt und einer Mikrowellen-Antennenanordnung der Positionsmessvorrichtung anhand von Mikrowellen sowie ein Verfahren zur Herstellung einer Positionsmessvorrichtung.

Eine derartige Positionsmessvorrichtung ist beispielsweise aus der deutschen Offenlegungsschrift DE 102 05 904 A1 bekannt. Die Leitungsstruktur wird durch ein Gehäuse eines pneumatischen Zylinders oder eines Hydraulikzylinders gebildet, in dem ein Kolben längsbeweglich angeordnet ist. Die Positionsmessvorrichtung dient zur Abstandsmessung des Kolbens bezüglich einer Längs-Endlage, in deren Bereich die Mikrowellen-Antennenanordnung angeordnet ist. Die Mikrowellen-Antennenanordnung enthält eine Koppelsonde, die von einem dielektrischen Haltesystem gehalten wird. Das Gehäuse bzw. die Leitungsstruktur wirkt mit der Koppelsonde bei der Ausbreitung der Mikrowellen zusammen. Es ist daher wesentlich, dass der Abstand der Koppelsonde relativ zu dem Gehäuse konstant ist, das heißt, dass das dielektrische Haltesystem diesen konstanten Abstand gewährleistet.

Dadurch wird die Fertigung der Positionsmessvorrichtung bzw. des Zylinders mit der Positionsmessvorrichtung schwieriger und aufwendiger, da geringe Fertigungstoleranzen eingehalten werden müssen. Auch beim Betrieb des Zylinders bzw. der Positionsmessvorrichtung kann sich der Relativabstand von der Koppelsonde zu der Leitungsstruktur, das heißt dem Gehäuse des Zylinders verändern, beispielsweise infolge von Druckbelastungen, mechanischen Schwingungen oder des Aufpralls des Kolbens auf einen Endanschlag im Bereich der Mikrowellen-Antennenanordnung.

Es ist daher die Aufgabe der vorliegenden Erfindung, eine Positionsmessvorrichtung mit einer verbesserten Mikrowellen-Antennenanordnung sowie ein Verfahren zu deren Herstellung bereitzustellen.

Zur Lösung der Aufgabe ist bei einer Positionsmessvorrichtung der eingangs genannten Art vorgesehen, dass die Mikrowellen-Antennenanordnung einen dielektrischen Antennenkörper aufweist, der zumindest teilweise mit einer elektrisch leitfähigen Beschichtung versehen ist, und dass die elektrisch leitfähige Beschichtung eine erste und eine zweite Polfläche einer Koppelsonde der Mikrowellen-Antennenanordnung bildet wobei die Polflächen elektrisch voneinander isoliert sind. Zur Lösung der Aufgabe dient ferner ein Verfahren gemäß einem weiteren unabhängigen Anspruch.

Die erfindungsgemäße Positionsmessvorrichtung hat eine Mikrowellen-Antennenanordnung, bei der die charakteristischen Abstände zwischen den Polflächen der Koppelsonde im wesentlichen konstant sind. Es ist dabei möglich, dass zwei oder mehrere Polflächen auf dem Antennenkörper ausgebildet sind, die insgesamt eine Koppelsonde oder mehrere Koppelsonden bilden. Die erste und die zweite Polfläche sind beispielsweise eine Innenfläche und eine Außenfläche an dem Antennenkörper, so dass der charakteristische Abstand zwischen den beiden Polflächen bereits durch die Wandungsdicke des Antennenkörpers zwischen der Innenfläche und der Außenfläche ein vorbestimmtes Maß hat, das zweckmäßigerweise eine enge Toleranz aufweist. Auf diesem Wege sind zwischen den beiden Polflächen, die Teile der elektrisch leitfähigen Beschichtung bilden, die charakteristischen Abstände fest definiert und im wesentlichen von Fertigungsschwankungen und besonders von Montageschwankungen unabhängig.

Die Beschichtung aus beispielsweise Kupfer und/oder Nickel und/oder Aluminium und/oder Gold oder einem sonstigen elektrisch leitfähigen Material kann z.B. durch Galvanisieren und/oder durch ein Bedampfungsverfahren hergestellt werden, beispielsweise ein physikalisches und/oder chemisches Bedampfungsverfahren (PVD = Physical Vapor Deposition / CVD = Chemical Vapor Deposition). Bei dem Antennenkörper kann es sich aber auch um einen dreidimensionalen Leiterkörper handeln, beispielsweise einen sogenannten MID-Leiterkörper (MID = Moulded Interconnect Device).

Im Rahmen der Erfindung ist es auch möglich, dass eine oder mehrere Polflächen durch einen Abstrahlkörper gebildet werden, der durch den Antennenkörper gehalten wird. Der Abstrahlkörper ist beispielsweise in den Antennenkörper eingeklebt, eingerastet, eingeschweißt, eingegossen oder eingespritzt. Der Abstrahlkörper besteht beispielsweise aus Metall. Der Abstrahlkörper hat die gleiche elektrische Polarität wie eine der Polflächen der Koppelsonde und ist z.B. unmittelbar mit dieser elektrisch verbunden. Besonders bevorzugt ist es, den Abstrahlkörper zu vergießen oder zu umspritzen, so dass bereits durch die Spritzform bzw. Gussform die Wandungsdicke des Antennenkörpers definiert ist. Durch eine nachgeschaltete spanabhebende Bearbeitung, z.B. Drehen und/oder Fräsen, kann die Wandungsdicke genauer eingestellt werden. Wenn der Antennenkörper mit dem von ihm gehaltenen Abstrahlkörper ausgehärtet ist, ggf. nachbearbeitet ist, wird er außenseitig mit einem elektrisch leitenden Material beschichtet, das dann die mit dem Abstrahlkörper zusammenwirkende Polfläche der Koppelsonde bildet.

Der Abstrahlkörper kann auch dadurch hergestellt werden, dass ein elektrisch leitfähiges Material, beispielsweise ein elektrisch leitfähiger Kunststoff, in eine Kavität des Antennenkörpers eingegossen oder eingespritzt wird.

Der Antennenkörper wird dann zweckmäßigerweise als Ganzes, d.h. mit bereits vormontiertem Abstrahlkörper, in die Leitungsstruktur eingesetzt. Bei der Leitungsstruktur handelt es sich beispielsweise um ein Gehäuse, in dem das Messobjekt angeordnet ist. Das Gehäuse bzw. die Leiterstruktur sind elektrisch leitfähig. An das Gehäuse ist eine durch die Beschichtung gebildete Polfläche des elektrischen Antennenkörpers elektrisch angeschlossen, beispielsweise durch Einlöten oder Anlöten, Schweißen, Verbinden mit einem elektrisch leitfähigen Klebematerial oder dergleichen.

Beispielsweise bildet die Positionsmessvorrichtung einen Bestandteil einer Aktorvorrichtung. Die Aktorvorrichtung, z.B. ein elektrischer und/oder fluidtechnischer Antrieb, insbesondere ein pneumatischer Antrieb, hat ein elektrisch leitfähiges Gehäuse, in dem ein Aktorglied, beispielsweise ein Läufer eines elektrischen Motors bzw. ein Kolben eines pneumatischen Antriebs, beweglich, insbesondere linear beweglich, angeordnet ist. Die Positionsmessvorrichtung misst z.B. den Abstand des Aktorglieds von einem Endanschlag.

Das bewegliche Messobjekt, beispielsweise das Ventilglied bzw. das Aktorglied, reflektiert Mikrowellen, die mit Hilfe der Koppelsonde in die Leitungsstruktur bzw. das Gehäuse eingekoppelt werden. Anhand einer Laufzeitmessung und/oder anhand eines Phasenvergleichs zwischen ausgesendeten Mikrowellen und empfangenen Mikrowellen, die beispielsweise einen Frequenzbereich von 10 MHz - 25 GHz haben, ermittelt die Positionsmessvorrichtung einen jeweiligen Abstand des Messobjekts von der Koppelsonde. Es versteht sich, dass die Mikrowellen-Antennenanordnung auch zwei Koppelsonden enthalten kann, eine zum Senden und eine zum Empfangen von Mikrowellen. Besonders bevorzugt ist jedoch, wenn nur eine einzige Koppelsonde erforderlich ist.

Die erfindungsgemäße Positionsmessvorrichtung kann aber auch einen Bestandteil eines fluidtechnischen Wartungsgerätes bilden, beispielsweise eines pneumatischen Wartungsgerätes. Die Positionsmessvorrichtung dient dann beispielsweise zur Mengenmessung eines Additivs für das Fluid, beispielsweise eines Öls, das in das Fluid eingespritzt wird, oder zu Messungen eines Ausscheidungsprodukts, das das Wartungsgerät aus dem Fluid extrahiert und in einem Aufnahmeraum deponiert. Die Positionsmessvorrichtung misst den Füllstand des Additivs bzw. des Ausscheidungsprodukts in dem Aufnahmeraum.

Eine weitere Variante der Erfindung kann vorsehen, dass die Positionsmessvorrichtung einen Bestandteil eines Fluidventils bildet, beispielsweise eines pneumatischen Ventils. Das Messobjekt ist in diesem Falle z.B. das Ventilglied des Fluidventils, beispielsweise ein Antriebskolben, mit dem das Ventilglied pneumatisch angetrieben wird.

Vorzugsweise wird für den elektrischen Antennenkörper ein Kunststoffmaterial verwendet, das eine geringe Wärmeausdehnung hat. Als zweckmäßig haben sich beispielsweise Polycarbonat-Werkstoffe, z.B. Lexan, Makrolon oder dergleichen, oder flüssigkristalliner Copolyester (Liquid Cristal Polymere = LCP), z.B. Vectra, herausgestellt, der gute Festigkeitseigenschaften und eine niedrige Wärmeausdehnung aufweist.

Die erste und zweite Polfläche haben vorteilhaft im wesentlichen konstante Abstände, beispielsweise abschnittsweise etwa konstante radiale Abstände. Die beiden Polflächen sind elektrisch voneinander isoliert. Vorteilhafterweise sind die erste und die zweite Polfläche zueinander konzentrisch. Die Koppelsonde bildet vorteilhaft einen Koaxial-Dipol.

Der Antennenkörper ist zweckmäßigerweise rotationssymmetrisch, z.B. ein Zylinder oder ein Konus. Er kann auch im wesentlichen ein Zylinder, insbesondere ein Stufenzylinder, sein, der konische Abschnitte enthalten kann.

Der Antennenkörper kann auch einen rohrartigen, innen und außen beschichteten Abschnitt enthalten, der einen Koaxialleiter bildet.

Es ist möglich, die erste und/oder die zweite Polfläche zur Umgebung hin zumindest teilweise mit einer elektrischen Isolationsschicht zu versehen, beispielsweise innenseitig. Außenseitig ist es besonders bevorzugt, dass die dort befindliche Polfläche, insbesondere die zweite Polfläche, so in elektrischem Kontakt mit der Leitungsstruktur steht, in der das zu messende Messobjekt befindet, dass die Mikrowellen-Antennenanordnung Mikrowellen in die Leitungsstruktur einkoppeln und/oder aus der Leitungsstruktur empfangen kann. Der Innenraum des Antennenkörpers kann hohl sein oder mit einem Material verfüllt sein, beispielsweise einem dielektrischen Material oder mit Metall.

In oder an dem Antennenkörper kann ein elektrischer Leiter angeordnet sein, der die erste oder die zweite Polfläche elektrisch mit einer Mikrowellensendeeinrichtung und/oder einer Mikrowellenempfangseinrichtung verbindet. Der Leiter ist zweckmäßigerweise koaxial in dem Antennenkörper angeordnet. Es versteht sich, dass auch mehrere elektrische Leiter vorhanden sein können. Der oder die elektrischen Leiter haben vorzugsweise einen flexiblen Abschnitt, der eine mechanische Entkopplung des Antennenkörpers bzw. der Koppelsonde von der Mikrowellensende- und/oder -empfangseinrichtung ermöglicht. Der oder die elektrischen Leiter haben zweckmäßigerweise eine außenseitige Schirmung. Bei dem elektrischen Leiter kann es sich um eine Art Dorn handeln, der den Antennenkörper durchdringt. Insgesamt ist z.B. eine Art Pin gebildet.

Nachfolgend werden Ausführungsbeispiele der Erfindung anhand der Zeichnung erläutert. Es zeigen:
- Figur 1: eine schematische Querschnittsansicht einer Aktorvorrichtung, die mit einer erfindungsgemäßen Positionsmessvorrichtung ausgestattet ist, etwa entsprechend einer Linie A-A eines Deckels der Aktorvorrichtung in Figur 2,
- Figur 2: eine perspektivische Explosionsdarstellung des Deckelbereichs der Aktorvorrichtung gemäß Figur 1 mit einer Schutzabdeckungseinrichtung, einem Abstrahlkörper und einem Antennenkörper zum Halten des Abstrahlkörpers,
- Figur 3: eine schematische Querschnittsansicht einer zweiten Aktorvorrichtung mit einem weiteren Ausführungsbeispiel einer Mikrowellen-Antennenanordnung gemäß der Erfindung,

- Figur 4: eine schematische Querschnittsansicht eines weiteren Ausführungsbeispiels einer erfindungsgemäßen Mikrowellen-Antennenanordnung in einer teilweisen Querschnittsansicht, etwa entsprechend Figur 3,
- Figur 5: eine schematische Querschnittsansicht eines beschichteten Antennenkörpers, der eine Mikrowellen-Antennenanordnung gemäß der Erfindung bildet,
- Figur 6: eine Querschnittsansicht etwa entsprechend Figur 5 eines weiteren Ausführungsbeispiels eines erfindungsgemäß beschichteten Antennenkörpers einer Mikrowellen-Antennenanordnung, und
- Figur 7: eine Querschnittsansicht eines pneumatischen Wartungsgeräts, bei dem eine erfindungsgemäße Positionsmessvorrichtung oder Abstandsmessvorrichtung eine Füllhöhe einer Flüssigkeit oder eines Pulvers misst.

Ein pneumatischer Arbeitszylinder 10 bildet eine Aktorvorrichtung 11, insbesondere eine fluidtechnische Aktorvorrichtung. In einem Gehäuse 12 ist ein Kolben 13, der ein Aktorglied 14 bildet, linear hin und her beweglich gelagert. Über Fluid- bzw. Druckluftanschlüsse 15, 16 kann Druckluft 17 in eine Kammer 18, die einen Bewegungsraum 19 für das Aktorglied 14 bildet, eingebracht bzw. ausgelassen werden, um den Kolben 13 anzutreiben.

Ein Mittelteil 20 des Gehäuses 12 mit einer Umfangswandung 25, z.B. aus Metall, ist rohrartig ausgestaltet und hat einen Innenquerschnitt, der mit einer Außenkontur des Aktorglieds 14 korreliert und beispielsweise im wesentlichen kreisrund ist. Ein Lager-Deckel 23 und ein Abschluss-Deckel 24, insbesondere aus Metall, an Enden des Gehäuses 12 verschließen die Kammer 18 druckdicht, z.B. mit Dichtungen, O-Ringen oder dergleichen zwischen den Deckeln 23, 24 und dem Mittelteil 20. Die Deckel 23, 24 sind z.B. mit Bolzen an das Mittelteil 20 angeschraubt, die durch Bohrungen 21 an Verstärkungs- und Haltestegen 29 durchgesteckt sind.

Um den Kolben 13 herum verläuft ringförmig eine Dichtung 33, so dass der Kolben 13 die Kammer 18 in zwei druckdicht voneinander getrennte Teilräume unterteilt. Die Kolbenstange 32 bildet ein Kraftabgriffsglied, das den Lager-Deckel 23 durchdringt und dort an einem Lager 34 gelagert ist.

Der Kolben 13 ist in Längserstreckungsrichtung 30 zwischen dem Lager-Deckel 23 und dem Abschluss-Deckel 24 längsbeweglich (Pfeil 30'). Eine Positionsmessvorrichtung 40 misst den Abstand 41 des Aktorglieds 14 relativ zu einer Endlage 42 im Bereich des Abschluss-Deckels 24. Die Positionsmessvorrichtung 40 arbeitet mit Hilfe von Mikrowellen, beispielsweise im Bereich von 10 MHz bis ca. 25 GHz, zweckmäßigerweise etwa 3 bis 10 GHz, die eine Mikrowellen-Antennenanordnung 43 mit einer Koppelsonde 44 in den Bewegungsraum 19 aussendet, der zumindest an seiner Innenseite im wesentlichen elektrisch leitfähig ist und somit eine Leitungsstruktur 45 für die Mikrowellen bildet.

Das Aktorglied 14 bildet ein Messobjekt 46, das die Mikrowellen reflektiert. In Abhängigkeit von der jeweiligen Position des Messobjekts 46 in dem Bewegungsraum 19 - eine von der Endlage 42 entfernte Stellung des Aktorglieds 14 ist in gestrichelten Linien dargestellt - ändert sich die Phase der von der Mikrowellen-Antennenanordnung 43 ausgesendeten und empfangenen Mikrowellen. Anhand der Phasenlage und/oder der Laufzeit der Mikrowellen kann eine Auswerteeinrichtung 47 der Positionsmessvorrichtung 40 die Position des Aktorglieds 14 im Bewegungsraum 19 ermitteln und beispielsweise an eine nicht dargestellte Steuerungsvorrichtung zur Steuerung der Aktorvorrichtung 11 melden, z.B. eine speicherprogrammierbare Steuerungsvorrichtung. Die Auswerteeinrichtung 47 enthält beispielsweise eine Sendeeinrichtung und eine Empfangseinrichtung zum Senden und Empfangen der Mikrowellen mittels der Koppelsonde 44, und sonstige Bauteile 58, z.B. einen digitalen Signalprozessor, eine Busankopplung, eine Sende- und/oder Empfangseinrichtung zum drahtgebundenen und/oder drahtlosen Senden und Empfangeinrichtung zum Senden von Positionssignalen mittels einer Antenne 57 und/oder einer nicht dargestellten Leitung an die übergeordnete Steuerung und dergleichen.

Die Auswerteeinrichtung 47 enthält beispielsweise eine Hochfrequenz-Platine 48 mit nicht näher bezeichneten Bauteilen und Leiterbahnen zum Erzeugen bzw. Senden und Empfangen von Mikrowellen sowie eine Auswerteplatine 49, die beispielsweise eine Busankopplung enthält. Die Hochfrequenz-Platine 48 enthält oder bildet eine Mikrowellensendeeinrichtung und eine Mikrowellenempfangseinrichtung. Die Platinen 48, 49 sind elektrisch miteinander verbunden, beispielsweise mit einem Steckerkabel 50. Ein Deckel 51 schützt die Platinen 48, 49, die z.B. in einer Kammer 38 des Gehäuses 12 bzw. des Abschluss-Deckels 24 angeordnet sind, vor Umwelteinflüssen.

Die Mikrowellen-Antennenanordnung 43 enthält einen elektrisch isolierenden bzw. dielektrischen Antennenkörper 52, der beispielsweise eine gestufte, zylindrische Gestalt aufweist. Der Antennenkörper 52 ist zweckmäßigerweise ein Kunststoff-Spritzgussteil, insbesondere aus einem elektrisch isolierenden, eine geringe Wärmeausdehnung aufweisenden Kunststoff.

Der Antennenkörper 52 hält zentral, insbesondere koaxial, einen zumindest außenseitig elektrisch leitfähigen Abstrahlkörper 54 der Mikrowellen-Antennenanordnung 43.

Der Antennenkörper 52 und somit die Mikrowellen-Antennenanordnung 43 sind zentral, insbesondere koaxial, mit dem Mess- bzw. Bewegungsraum 19 an einer hinteren Stirnwandung 53 des Abschluss-Deckels 24 angeordnet, beispielsweise in eine entsprechende Ausnehmung oder Aufnahme 35 an der Stirnwandung 53 eingesteckt, eingeklebt, eingeschraubt oder in sonstiger Weise fest verbunden. Die Aufnahme 35 hat eine Innenkontur, die mit einer Außenkontur des Antennenkörpers 52, insbesondere eines Antennenabschnitts 27 des Antennenkörpers 52, korreliert, so dass dieser z.B. im wesentlichen flächig an Innenflächen der Aufnahme 35 anliegt.

Der Abstrahlkörper 54 weist erste Polflächen 55 auf, die mit zweiten Polflächen 56 des Gehäuses 12 bzw. der Leitungsstruktur 45 zusammenwirken. Der Abstrahlkörper 54 durchdringt den Antennenkörper 52 und ist mit einer Leitung 59 elektrisch mit der Hochfrequenz-Platine 48 verbunden. Die elektrisch leitende Stirnwand 53 und somit das Gehäuse 12 sind über eine z.B. gebondete Leitung 36 mit der Hochfrequenz-Platine 48 verbunden.

Eine an dem mittleren zylindrischen Antennenabschnitt 27 angeordnete vordere pilzartige Stirnwand 26 des Abstrahlkörpers 54 steht zum Mess- bzw. Bewegungsraum 19 hin vor und ist mittels eines elektrischen Leiterabschnitts 28 mit der Hochfrequenz-Platine 48 verbunden. Der Leiterabschnitt 28 ist durch den Antennenkörper 52 und einen Kanal 37 der Stirnwandung 53 hindurch, zweckmäßigerweise mit Isolationsabstand zu der Stirnwandung 53, zu der Hochfrequenz-Platine 48 geführt und über die zweckmäßigerweise flexible Leitung 59 mechanisch entkoppelt an die Hochfrequenz-Platine 48 angeschlossen. Der Leiterabschnitt 28 könnte auch in die Platine 48 eingesteckt sein, wenn an seinem Ende ein Steckabschnitt und an der Platine 48 eine Steckaufnahme wäre.

Die Stirnwand 26 liegt auf einer Stirnseite 84 eines Vorderteils 81 des Antennenkörpers 52 auf, insbesondere auf kreissegmentartigen Vorsprüngen 79. Das Vorderteil 81 weist einen größeren Umfang als ein hinterer Abschnitt 82 des Antennenkörpers 52 auf, der in der Aufnahme 35 aufgenommen ist. Das Vorderteil 81 liegt auf der Stirnwand 53 vorn auf bzw. steht vor die Stirnwand 53 vor.

Von der Stirnwand 26 in Richtung des Bewegungsraums 19 weg gehen die Mikrowellen von einem Koaxial-Mode in einen Hohlleitermode über.

Der Abstrahlkörper 54 ist beispielsweise ein im wesentlichen metallisches Einsatzstück, das an den Antennenkörper 52 geklebt und/oder geschweißt ist, insbesondere in einen Aufnahmeraum 83 des Antennenkörpers 52 eingeklebt oder eingeschweißt ist. Eine Variante der Erfindung sieht vor, dass der Abstrahlkörper 54 in einem Gussverfahren, insbesondere einem Spritzgussverfahren mit dem Antennenkörper 52 umspritzt wird.

Die Position der Mikrowellen-Antennenanordnung 43 relativ zu dem Gehäuse 12 bzw. der Leitungsstruktur 45, mit der die Mikrowellen-Antennenanordnung 43 zusammenwirkt, insbesondere aber die Position der Polflächen der Mikrowellen-Antennenanordnung 43 relativ zueinander sind zur exakten Positionsbestimmung des Abstandes 41 wesentlich. Damit diese Positionierung der Mikrowellen-Antennenanordnung 43 eingehalten werden und somit eine hohe Messgenauigkeit erzielt wird, sind bei der Aktorvorrichtung 11 die nachfolgenden Maßnahmen getroffen.

Eine Schutzabdeckungseinrichtung 60 dichtet die Mikrowellen-Antennenanordnung 43 gegenüber dem Druckraum bzw. Bewegungsraum 19 druckdicht ab. Vor der Mikrowellen-Antennenanordnung 43 ist ein Abdeckabschnitt 62 angeordnet, der von einem Anschlagabschnitt 61, insbesondere einem Anschlagring 64, gehalten wird. Beide Teile 62, 64 sind druckdicht verbunden, z.B. mittels nicht dargestellter Dichtungen, oder sie sind einstückig. Der Anschlagring 64 bildet vorn einen Anschlag 63 für den Kolben 13. Die Schutzabdeckungseinrichtung 60 ist druckdicht in das Gehäuse 12 eingesetzt, z.B. an den Deckel 24 angespritzt und/oder mit nicht dargestellten Dichtungen, z.B. zwischen einem Außenumfang der Schutzabdeckungseinrichtung 60 und der Seiten- oder Umfangswandung 25 und/oder einer Seiten- oder Umfangswandung des Deckels 24. Im hinteren Abschnitt der Schutzabdeckungseinrichtung 60 ist eine Kammer 65 durch den bodenartigen Abdeckabschnitt 62 sowie eine hintere Seitenwandung 66 gebildet. Ein vor die Stirnwand 53 vorstehendes Vorderteil der Mikrowellen-Antennenanordnung 43 ist in der Kammer 65 vor Umwelteinflüssen geschützt untergebracht und hat zu der Schutzabdeckungseinrichtung 60 einen vorderen und zweckmäßigerweise seitlichen Abstand 69, in den hinein sich der Abdeckabschnitt 62 verformen kann, beispielsweise in Folge einer Druckwelle, die das Aktorglied 14 verursacht.

Der Anschlagring 64 steht vor den Abschluss-Deckel 24 vor und erstreckt sich in das Mittelteil 20 hinein. An seinem vorderen Abschnitt, zwischen dem Anschlag 63 und der Zwischendecke, die den Abdeckabschnitt 62 bildet, begrenzt der Anschlagring 64 einen Aufnahmeraum 68, z.B. für eine nicht dargestellte Endlagendämpfung vorn am Kolben 13.

Die Schutzabdeckungseinrichtung 60 enthält einen Fluidkanal 70 zur Verbindung der Kammer 18 mit dem Druckluftanschluss 16, der beispielsweise durch den Anschlagring 64 hindurch verläuft.

Damit sich die Mikrowellen in dem Bewegungsraum 19 im wesentlichen symmetrisch ausbreiten können, ist dem Fluidkanal 70 als Kompensationsmittel 71 ein Blindkanal 72 zugeordnet, der an der dem Fluidkanal 70 entgegengesetzten Seite des Anschlagrings 64 verläuft. Der Blindkanal 72 endet an der Umfangswandung 67, d.h. die Umfangswandung 67 verschließt den Blindkanal 72 radial außen.

Die Schutzabdeckungseinrichtung 60 besteht aus einem dielektrischen Material, insbesondere aus einem Kunststoff mit geringer Volumenänderung in Abhängigkeit von thermischen Änderungen, z.B. aus Lexan, Vectra oder dergleichen. Die Schutzabdeckungseinrichtung 60 ist auf das Abstrahlverhalten der Mikrowellen-Antennenanordnung 43 abgestimmt, so dass sich die Mikrowellen, die von der Mikrowellen-Antennenanordnung 43 ausgesendet werden, in einem vorbestimmten Mode in der Leitungsstruktur 45 bzw. dem Bewegungsraum 19 ausbreiten.

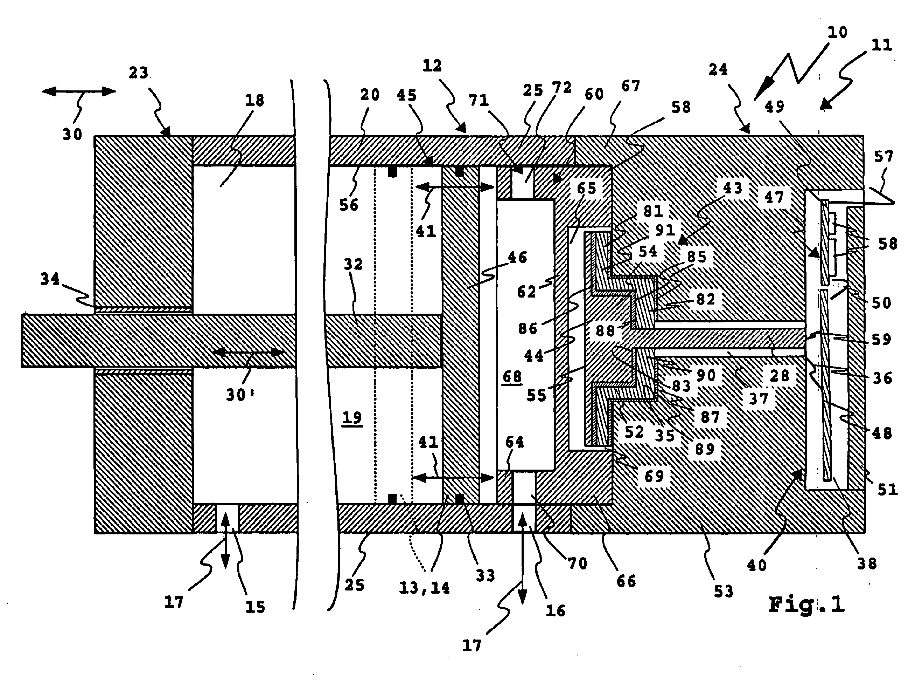

Ein vorderer Teil 73 der Schutzabdeckungseinrichtung 60 weist einen größeren Durchmesser auf als ein hinterer Teil 74, so dass zwischen dem vorderen und dem hinteren Teil 73, 74 ein Anschlag 75 gebildet ist. Dies ist in der schematischen Darstellung von Figur 1 nicht dargestellt. Der Anschlag 75 liegt an einer Stirnfläche 77 der Umfangswandung 67 des Abschluss-Deckels 24 an. Somit stützt sich die Schutzabdeckungseinrichtung 60 an der hinteren Stirnwandung 53 des Abschluss-Deckels 24 und an der Stirnfläche 77 ab.

Der Antennenkörper 52 ist mit einer elektrisch leitfähigen Beschichtung 85 versehen, die beispielsweise Kupfer und/oder Nickel und/oder Aluminium und/oder Gold enthält. Die Beschichtung 85 ist durch Galvanisieren, chemisches und/oder physikalisches Bedampfen, Sputtern oder dergleichen auf den Antennenkörper 52 aufgebracht. Die Beschichtung 85 bildet eine erste und zweite Polfläche 86, 87, die mit den ersten und zweiten Polflächen 55, 56 elektrisch leitfähig verbunden sind, beispielsweise durch Klebverbindungen und/oder elektrischem Berührkontakt und/oder Lötverbindungen oder dergleichen.

Die erste Polfläche 86 ist an der Stirnseite 84 sowie einer Innenfläche 88 des Aufnahmeraums 83 ausgebildet. Der Abstrahlkörper 54 ist beispielsweise in den Aufnahmeraum 83 eingepresst, so dass die ersten Polflächen 86, 55 elektrisch miteinander in Kontakt stehen. Es kann auch elektrisch leitfähiger Klebstoff zwischen den Polflächen 55, 86 vorgesehen sein.

Die zweite Polfläche 87 ist am Außenumfang 89 des Antennenkörpers 52 ausgebildet und mit der Leitungsstruktur 45 elektrisch verbunden, beispielsweise in die Aufnahme 35 eingepresst und/oder elektrisch leitfähig eingeklebt und/oder eingelötet oder dergleichen.

Die Stärke einer Wandung 90 des Antennenkörpers 52, an deren Innenfläche 88 und Außenumfang 89 die Metallisierung oder Beschichtung 85 angeordnet ist, ist abschnittsweise konstant. Dadurch sind auch die jeweiligen Abstände in diesen Abschnitten zwischen den ersten und zweiten Polflächen 86 und 87 zumindest im wesentlichen konstant, so dass mit der Mikrowellen-Antennenanordnung 43 gesendete Mikrowellen ein optimales Frequenzverhalten aufweisen.

Der Antennenkörper 52 ist aus einem dielektrischen Material, insbesondere aus einem Kunststoff mit geringer thermischer Volumenänderung hergestellt, z.B. Lexan, Vectra oder dergleichen. Beispielsweise im Rahmen eines Spritzgussverfahrens kann die Stärke der Wandung 90 optimal eingestellt werden. Es ist auch denkbar, den Antennenkörper 52 als ein Drehteil herzustellen, um die Fertigungsqualität bzw. die Stärke der Wandung 90 zu optimieren.

Der Antennenkörper 52 kann auch in die Aufnahme 35 eingeschraubt werden. Ferner ist es denkbar, einen erfindungsgemäß beschichteten Antennenkörper in einer Aufnahme an der jeweiligen Leitungsstruktur zu verspannen, beispielsweise mit einem eingesetzten Abstrahlkörper in der Art des Abstrahlkörpers 54, der den Antennenkörper durchdringt und an die Leitungsstruktur, beispielsweise das Gehäuse 12, die Platine 48 oder dergleichen angeschraubt ist. Eine solche Variante ist beispielsweise bei einer Aktorvorrichtung 111, d.h. einem pneumatischen Linearantrieb 110 realisiert.

Die Aktorvorrichtung 111 entspricht teilweise der Aktorvorrichtung 11, so dass für gleiche oder gleichartige Komponenten dieselben Bezugszeichen verwendet sind. Ähnliche oder veränderte Komponenten haben Bezugszeichen, die gegenüber dem Beispiel gemäß Figur 1 um 100 größer sind.

Die Aktorvorrichtung 111 enthält eine Mikrowellen-Antennenanordnung 143 einer Positionsmessvorrichtung 140 mit einem Antennenkörper 152 aus einem dielektrischen Material, beispielsweise einem Kunststoff. Eine Wandung 190 des Antennenkörpers 152 begrenzt eine Aufnahme bzw. einen Aufnahmeraum 183, der an seiner dem Mess- bzw. Bewegungsraum 19 zugewandten Vorderseite durch eine Stirnwand 126 eines Abstrahlkörpers 154 verschlossen ist.

Von einer Stirnwand 126 des Abstrahlkörpers 154 erstreckt sich nach hinten ein dornartiger Leiterabschnitt 128, der die Stirnwand 126 elektrisch mit einer Hochfrequenz-Platine 148 verbindet. Am hinteren Ende hat der Leiterabschnitt 128 beispielsweise einen Schraubabschnitt oder Steckabschnitt 159, der in eine Steckaufnahme 131 eingeschraubt bzw. eingesteckt ist. Der Steckabschnitt 159 kann auch ein Lötabschnitt sein, der an die Hochfrequenz-Platine 148 angelötet ist.

Von der Aufnahme 183 nach hinten weg erstreckt sich ein rohrartiger Kanalabschnitt, im folgenden als Rohrabschnitt 191 bezeichnet, nach hinten, der in den Kanal 37 des Abschluss-Deckels 24 eingesteckt ist. Der Leiterabschnitt 128 des Abstrahlkörpers 154 ist durch den Rohrabschnitt 191 nach hinten mit oder ohne (nicht dargestellt) Isolationsabstand zu dem Rohrabschnitt 191 geführt.

Der Aufnahmeraum 183 sowie teilweise eine Stirnseite 184 des Antennenkörpers 152 sind vorzugsweise mit metallischem Material elektrisch leitfähig beschichtet. Dadurch sind eine erste und zweite Polfläche 186, 187 an der Innenseite 188 und der Außenseite 189 der Wandung 190 ausgebildet. Die Polflächen 186, 187 erstrecken sich auch über den Rohrabschnitt 191, so dass die Innenseite und die Außenseite des Rohrabschnitts 191 metallisch leitfähig beschichtet sind. Daher ist der Rohrabschnitt 191 ein Koaxialleiter 194.

Die Stirnwand 126 des Abstrahlkörpers 154 liegt auf einem inneren Teilbereich der Stirnseite 184 des Antennenkörpers 152 und ist elektrisch mit der ersten Polfläche 186, die sich dorthin erstreckt, verbunden, beispielsweise mit Hilfe elektrisch leitfähigem Klebstoffes oder dergleichen. In dem Aufnahmeraum 183 ist ein Hohlraum gebildet, der radial außen durch die Wandung 190 und stirnseitig durch die Stirnwand 126 begrenzt wird.

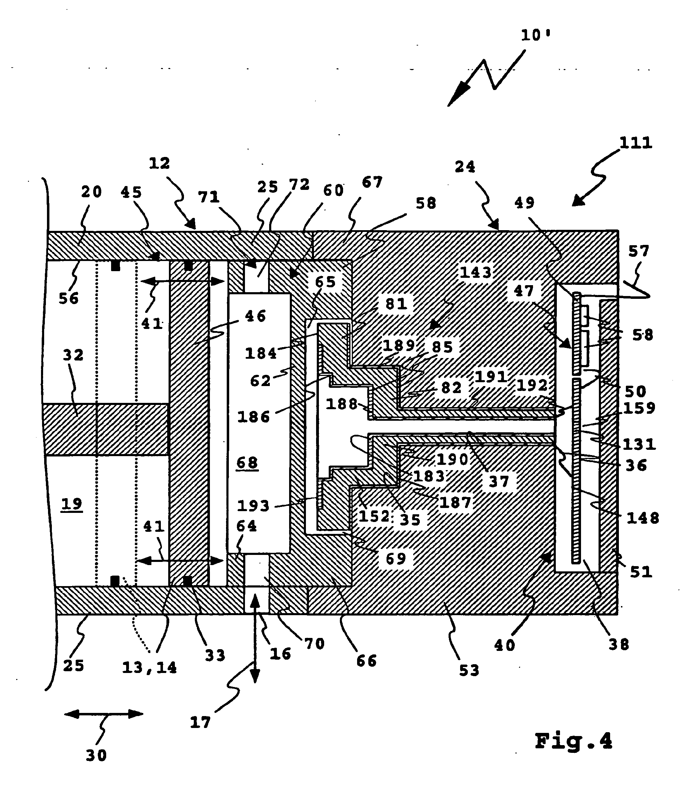

Die erste, innenseitige Polfläche 186 des Antennenkörpers 152 kann auch mit einer Leitung 192 elektrisch mit der Hochfrequenz-Platine 148 bzw. der Auswerteeinrichtung 47 verbunden sein. Der Abstrahlkörper 154 könnte dann sogar weggelassen werden, so dass der Antennenkörper 152 bereits einen Antennendipol bildet. Eine solche Variante ist in Figur 4 dargestellt. In einer Weiterbildung der dort dargestellten Variante des Antennenkörpers 152 könnten beispielsweise die stirnseitigen Abschnitte 193 der ersten Polfläche 186 größer ausgestaltet sein. Diese in Figur 4 dargestellt Variante der Erfindung hat besonders geringe Fertigungstoleranzen, da bereits durch den Antennenkörper 152 ein vollständiger Antennendipol bzw. eine Koppelsonde gebildet ist und die Beschichtung 85 jedenfalls in allen Abschnitten des Antennenkörpers 152 den gewünschten, definierten Abstand im jeweiligen Bereich hat.

Ferner wäre es bei einer Abwandlung der Ausführungsform gemäß Figur 1 auch denkbar, die Beschichtung 85 nur außenseitig anzubringen, so dass an dem Antennenkörper 52 nur eine außenseitige zweite Polfläche 87 angeordnet ist.

Es ist auch möglich, den Antennenkörper 52 mit dem Material des Abstrahlkörpers 54 zu umspritzen und anschließend die Außenseite des Antennenkörpers 52 mit der zweiten Polfläche 87 elektrisch leitfähig zu beschichten.

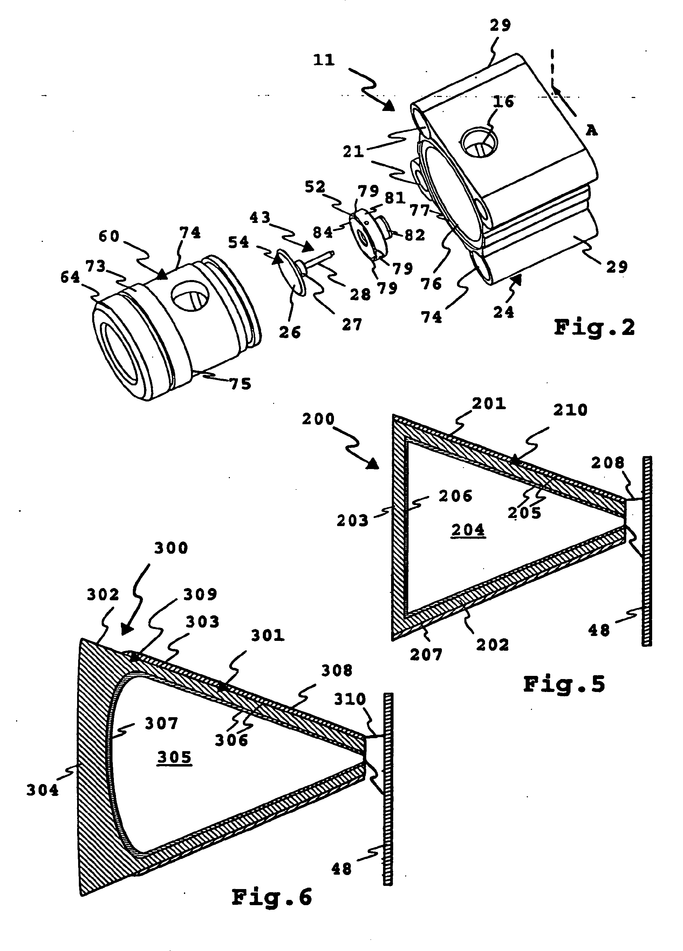

Das erfindungsgemäße Verfahren, eine Mikrowellen-Antennenanordnung durch Beschichten eines dielektrischen Antennenkörpers herzustellen, erlaubt zahlreiche Freiheitsgrade bei der geometrischen Ausgestaltung der jeweiligen Koppelsonde. Beispielsweise ist eine im wesentlichen kegelige oder horizontale Bauform, wie bei einer Mikrowellen-Antennenanordnung 200 gemäß Figur 5 ohne weiteres realisierbar.

Eine an ihrem Außenumfang konische Wandung 202 eines Antennenkörpers 210 mit einer im wesentlichen ebenen Stirnseite 203 begrenzt einen nach hinten offenen Innenraum 204. Der Außenumfang 201 und der Innenraum 204 sind mit einer Beschichtung 205 versehen, so dass elektrisch voneinander isolierte erste und zweite Polflächen 206, 207 gebildet sind. Die Polflächen 206, 207 sind beispielsweise mit Leitungen 208 an die Hochfrequenz-Platine 48 anschließbar und bilden eine Koppelsonde 209. Die Stärke der Wandung 202 ist bei der Fertigung des Antennenkörpers 210 definierbar, so dass die Abstände zwischen den beiden Polflächen 206, 207 und somit das Sende- und Empfangsverhalten der Mikrowellen-Antennenanordnung 200 präzise einstellbar ist.

Eine Mikrowellen-Antennenanordnung 300 gemäß Figur 6 enthält einen ebenfalls im wesentlichen konischen Antennenkörper 301 aus einem dielektrischen Kunststoffmaterial, der beispielsweise durch ein Spritzgussverfahren hergestellt ist. Ein Außenumfang 302 einer Umfangswandung 303 des Antennenkörpers 301 ist im wesentlichen konisch. Eine Stirnwandung 304 des Antennenkörpers 301 ist außenseitig, das heißt zu einem Bewegungsraum eines Aktorglieds oder allgemeiner einem Messraum hin im wesentlichen plan, an der Innenseite, im Bereich eines Innenraums 305 jedoch ausgerundet. Der Innenraum 305 hat eine keulenartige Gestalt. Der Innenraum 305 wird von der Umfangswandung 303 und der Stirnwandung 304 begrenzt.

Der Innenraum 305 ist elektrisch leitfähig beschichtet, so dass eine erste Polfläche 307 gebildet ist. Am Außenumfang 302 ist eine zweite Polfläche 308 durch eine elektrisch leitfähige Beschichtung 306 gebildet. Die erste Polfläche 307 ist nicht bis nach ganz nach vorn zur Vorderseite der Stirnwandung 304 geführt. Die Polflächen 307, 308 bilden insgesamt eine Koppelsonde 309, die mit zweckmäßigerweise flexiblen Leitungen an eine Hochfrequenz-Platine 48 anschließbar ist.

Die Stärke sowie der geometrische Verlauf von Wandungen erfindungsgemäßer Antennenkörper und somit die Trägerflächen für die elektrische Beschichtung, die die erste und/oder zweite Polfläche bilden, die geometrische Flächenausdehnung und Stärke der Beschichtung sind ohne weiteres variierbar, um die gewünschten Sende- und Empfangseigenschaften der jeweiligen Mikrowellen-Antennenanordnung herzustellen.

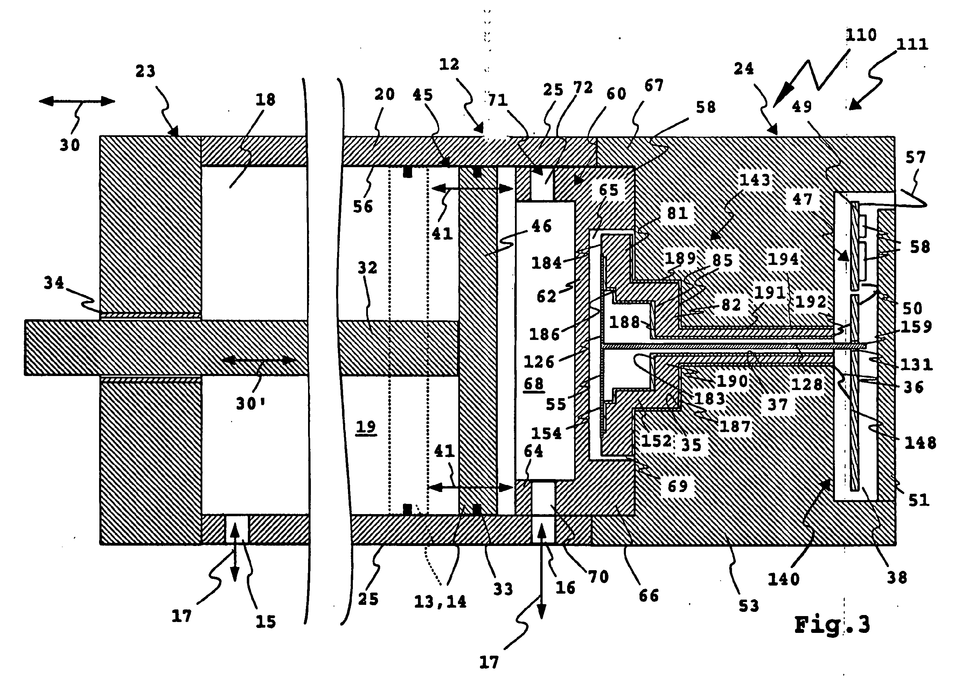

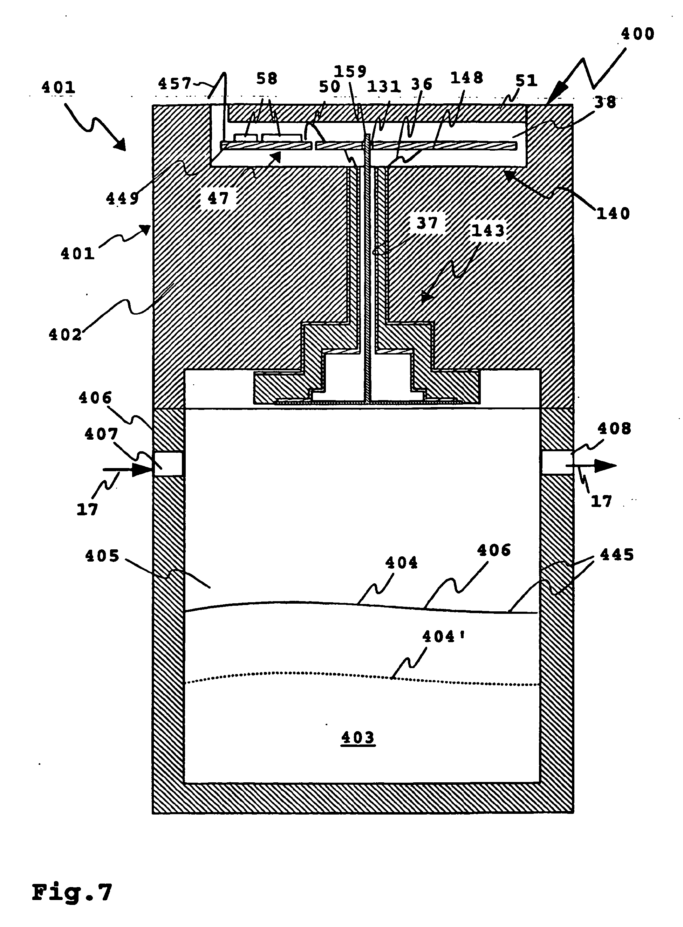

Ein weiteres Einsatzgebiet einer erfindungsgemäßen Positionsmessvorrichtung ist in Figur 7 dargestellt. Die im Zusammenhang mit Figur 3 beschriebene Positionsmessvorrichtung 140 ist in ein fluidtechnisches, insbesondere ein pneumatisches Wartungsgerät 400 eingebaut, beispielsweise einen Öler oder einen Trockner zur Aufbereitung von Druckluft 17. Die Positionsmessvorrichtung 140 ist an der Oberseite eines Gehäuses 401, in einem Deckel 402 eines Behälters 406 angeordnet und misst die Füllhöhe 404, 404' einer Flüssigkeit 403, beispielsweise eines Ausscheidungsproduktes aus der Druckluft 17 oder eines Additivs, das Druckluft 17 beigemengt wird. Die Flüssigkeit 403 ist in einem Aufnahmeraum 405 des Behälters 406 unterhalb der Positionsmessvorrichtung 40 enthalten. Die Druckluft 17 strömt durch einen Einlass 407 in den Aufnahmeraum 405 ein und durch einen Auslass 408 wieder aus.

Das Gehäuse 401 ist zumindest im Bereich des Aufnahmeraums 405 elektrisch leitfähig und enthält so eine elektrisch leitfähige Leitungsstruktur 445. Die Flüssigkeit 403 bildet ein Messobjekt 446. Die Positionsmessvorrichtung 140 misst einen Abstand 441 der Flüssigkeit 403 von dem Deckel 402. Die Positionsmessvorrichtung 140 meldet den Füllhöhe 404, 404' drahtgebunden über eine Leitung 457, insbesondere eine Busleitung, an eine nicht dargestellte Steuerung und/oder eine Anzeigeeinrichtung.

## Patentansprüche

1. Positionsmessvorrichtung zur Bestimmung eines Abstandes zwischen einem in einer Leitungsstruktur (45; 445) angeordneten Messobjekt (46; 446) und einer Mikrowellen-Antennenanordnung (43; 143; 200; 300) der Positionsmessvorrichtung (40; 140) anhand von Mikrowellen, **dadurch gekennzeichnet, dass** die Mikrowellen-Antennenanordnung einen dielektrischen Antennenkörper (52; 152; 210; 301) aufweist, der zumindest teilweise mit einer elektrisch leitfähigen Beschichtung (85; 205; 306) versehen ist, und dass die elektrisch leitfähige Beschichtung eine erste und eine zweite Polfläche (86, 87; 186, 187; 206, 207; 307, 308) einer Koppelsonde (44; 209; 309) der Mikrowellen-Antennenanordnung (43; 143; 200; 300) bildet, wobei die Polflächen (86, 87; 186, 187; 206, 207; 307, 308) elektrisch voneinander isoliert sind.

2. Positionsmessvorrichtung nach Anspruch 1, **dadurch gekennzeichnet, dass** die erste oder die zweite Polfläche (86, 87; 186, 187; 206, 207; 307, 308) mit der Leitungsstruktur (45; 445) elektrisch verbunden ist.

3. Positionsmessvorrichtung nach Anspruch 1 oder 2, **dadurch gekennzeichnet, dass** zwischen der ersten und der zweiten Polfläche (86, 87; 186, 187; 206, 207; 307, 308) im wesentlichen konstante, insbesondere radial konstante, Abstände vorhanden sind.

4. Positionsmessvorrichtung nach einem der vorhergehenden Ansprüche, **dadurch gekennzeichnet, dass** die erste und die zweite Polfläche (86, 87; 186, 187; 206, 207; 307, 308) zueinander konzentrisch sind.

5. Positionsmessvorrichtung nach einem der vorhergehenden Ansprüche, **dadurch gekennzeichnet, dass** die erste Polfläche (86; 186, 206; 307) an einer Innenfläche (88) eines Innenraumes (83) des Antennenkörpers (52; 152; 210; 301) und/oder einer Stirnseite (84) des Antennenkörpers angeordnet ist oder diese bildet, und dass die zweite Polfläche (87; 187; 207; 308) an der Außenfläche (89) des Antennenkörpers (52; 152; 210; 301) angeordnet ist oder diese bildet.

6. Positionsmessvorrichtung nach Anspruch 5, **dadurch gekennzeichnet, dass** der Innenraum (83) hohl oder mit einem dielektrischen oder elektrisch leitfähigen Material ausgefüllt ist.

7. Positionsmessvorrichtung nach einem der vorhergehenden Ansprüche, **dadurch gekennzeichnet, dass** die erste Polfläche (86; 186, 206; 307) und/oder die zweite Polfläche (87; 187; 207; 308) zur Umgebung hin zumindest teilweise mit einer elektrischen Isolationsschicht versehen sind.

8. Positionsmessvorrichtung nach einem der vorhergehenden Ansprüche, **dadurch gekennzeichnet, dass** die elektrisch leitfähige Beschichtung (85; 205; 306) durch ein physikalisches und/oder chemisches Bedampfungsverfahren und/oder durch Galvanisieren und/oder durch Laserbeschichtung und/oder durch thermisches Beschichten hergestellt ist.

9. Positionsmessvorrichtung nach einem der vorhergehenden Ansprüche, **dadurch gekennzeichnet, dass** der Antennenkörper (52; 152; 210; 301) ein dreidimensionaler Leiterkörper ist.

10. Positionsmessvorrichtung nach einem der vorhergehenden Ansprüche, **dadurch gekennzeichnet, dass** ein Abschnitt des Antennenkörpers (52; 152; 210; 301) als ein Koaxialleiter (194) ausgestaltet ist.

11. Positionsmessvorrichtung nach einem der vorhergehenden Ansprüche, **dadurch gekennzeichnet, dass** die erste und/oder die zweite Polfläche (86, 87; 186, 187; 206, 207; 307, 308) mit einem flexiblen elektrischen Leiter (36, 59) mechanisch entkoppelt mit der Mikrowellensendeeinrichtung und/oder der Mikrowellenempfangseinrichtung (48) verbunden sind.

12. Positionsmessvorrichtung nach einem der vorhergehenden Ansprüche, **dadurch gekennzeichnet, dass** die erste Polfläche (86; 186; 206; 307) zumindest teilweise an einer zur Sende- und/oder Empfangsrichtung der Koppelsonde (44; 209; 309) hin orientierten Stirnseite (84) des Antennenkörpers (52; 152; 210; 301) angeordnet ist und die zweite Polfläche (87; 187; 207; 308) an einem Außenumfang (89) des Antennenkörpers (52; 152; 210; 301).

13. Positionsmessvorrichtung nach einem der vorhergehenden Ansprüche, **dadurch gekennzeichnet, dass** die erste Polfläche (86, 87; 186, 187; 206, 207; 307, 308) der Koppelsonde (44; 209; 309) zumindest teilweise durch einen von dem Antennenkörper (52; 152; 210; 301) gehaltenen Abstrahlkörper (54; 154) gebildet ist.

14. Positionsmessvorrichtung nach Anspruch 13, **dadurch gekennzeichnet, dass** der Abstrahlkörper (54; 154) mit einer Polfläche (86, 87; 186, 187; 206, 207; 307, 308) des Antennenkörpers elektrisch verbunden ist.

15. Positionsmessvorrichtung nach Anspruch 13 oder 14, **dadurch gekennzeichnet, dass** der Abstrahlkörper (54; 154) im wesentlichen aus Metall besteht.

16. Positionsmessvorrichtung nach einem der vorhergehenden Ansprüche, **dadurch gekennzeichnet, dass** sie einen Bestandteil einer Aktorvorrichtung (11; 111), insbesondere eines elektrischen und/oder fluidtechnischen Antriebs (10; 110) bildet, und dass das Messobjekt (46; 446) ein Aktorglied (14) der Aktorvorrichtung ist.

17. Positionsmessvorrichtung nach einem der Ansprüche 1 bis 15, **dadurch gekennzeichnet, dass** sie einen Bestandteil eines fluidtechnischen, insbesondere pneumatischen, Wartungsgeräts (400) bildet, und dass sie zur Mengenmessung eines Additivs (403) für das Fluid und/oder eines Ausscheidungsproduktes aus dem Fluid in einem Aufnahmeraum des Wartungsgeräts ausgestaltet ist.

18. Positionsmessvorrichtung nach einem der Ansprüche 1 bis 15, **dadurch gekennzeichnet, dass** sie einen Bestandteil eines Fluidventils, insbesondere eines pneumatischen Ventils, bildet, und dass das Messobjekt (46; 446) ein Ventilglied des Fluidventils ist.

19. Verfahren zur Herstellung einer Positionsmessvorrichtung (40; 140) für eine Bestimmung eines Abstandes zwischen einem in einer Leitungsstruktur (45; 445) angeordneten Messobjekt (46; 446) und einer Mikrowellen-Antennenanordnung (43; 143; 200; 300) der Positionsmessvorrichtung anhand von Mikrowellen, **gekennzeichnet durch**
- Beschichten zumindest eines Teils eines dielektrischen Antennenkörpers (52; 152; 210; 301), der einen Bestandteil der Mikrowellen-Antennenanordnung (43; 143; 200; 300) bildet, mit einer elektrisch leitfähigen Beschichtung (85; 205; 306), die eine erste und eine zweite Polfläche (86, 87; 186, 187; 206, 207; 307, 308) einer Koppelsonde (44; 209; 309) der Mikrowellen-Antennenanordnung bildet, wobei die Polflächen (86, 87; 186, 187; 206, 207; 307, 308) elektrisch voneinander isoliert sind.

20. Verfahren nach Anspruch 19, **gekennzeichnet durch** Umspritzen oder Vergießen eines die erste Polfläche (86; 186; 206; 307) der Koppelsonde (44; 209; 309) zumindest teilweise bildenden Abstrahlkörpers (54; 154) mit einem dielektrischen Material zur Bildung des Antennenkörpers (52; 152; 210; 301), wobei der Antennenkörper anschließend zur Bildung der zweiten Polfläche (87; 187; 207; 308) außenseitig zumindest teilweise beschichtet wird.

## Claims

1. Position measuring device for determining a distance between a measuring object (46; 446) located in a line structure (45; 445) and a microwave aerial arrangement (43; 143; 200; 300) of the position measuring device (40; 140) by means of microwaves, **characterised in that** the microwave aerial arrangement comprises a dielectric aerial body (52; 152; 210; 301), which is at least partially provided with an electrically conductive coating (85; 205; 306), and **in that** the electrically conductive coating forms a first and a second pole face (86, 87; 186, 187; 206, 207; 307, 308) of a coupling probe (44; 209; 309) of the microwave aerial arrangement (43; 143; 200; 300), wherein the pole faces (86, 87; 186, 187; 206, 207; 307, 308) are electrically insulated from one another.

2. Position measuring device according to claim 1, **characterised in that** the first or the second pole face (86, 87; 186, 187; 206, 207; 307, 308) is electrically connected to the line structure (45; 445).

3. Position measuring device according to claim 1 or 2, **characterised in that** the distances between the first and the second pole face (86, 87; 186, 187; 206, 207; 307, 308) are substantially constant, in particular radially constant.

4. Position measuring device according to any of the preceding claims, **characterised in that** the first and the second pole face (86, 87; 186, 187; 206, 207; 307, 308) are concentric relative to one another.

5. Position measuring device according to any of the preceding claims, **characterised in that** the first pole face (86; 186; 206; 307) is located on or represents an internal surface (88) of the interior (83) of the aerial body (52; 152; 210; 301) and/or an end face of the aerial body, and **in that** the second pole face (87; 187; 207; 308) is located on or forms the external surface (89) of the aerial body (52; 152; 210; 301).

6. Position measuring device according to claim 5, **characterised in that** the interior (83) is hollow or filled with a dielectric or electrically conducting material.

7. Position measuring device according to any of the preceding claims, **characterised in that** the first pole face (86; 186; 206; 307) and/or the second pole face (87; 187; 207; 308) are/is at least partially provided with an electrically insulating layer against the environment.

8. Position measuring device according to any of the preceding claims, **characterised in that** the electrically conductive coating (85; 205; 306) is applied in a physical and/or chemical vapour deposition process and/or by means of electrodeposition and/or laser coating and/or thermal coating.

9. Position measuring device according to any of the preceding claims, **characterised in that** the aerial body (52; 152; 210; 301) is a three-dimensional conductor body.

10. Position measuring device according to any of the preceding claims, **characterised in that** a section of the aerial body (52; 152; 210; 301) is designed as a coaxial conductor (194).

11. Position measuring device according to any of the preceding claims, **characterised in that** the first and/or the second pole face (86, 87; 186, 187; 206, 207; 307, 308) are/is connected to the microwave transmitter and/or the microwave receiver (48) by a flexible electric conductor (36, 39) in a mechanically uncoupled manner.

12. Position measuring device according to any of the preceding claims, **characterised in that** the first pole face (86; 186; 206; 307) is at least partially located on an end face (84) of the aerial body (52; 152; 210; 301) which is oriented towards the transmitter and/or receiver of the coupling probe (44; 209; 309) of the aerial body (52; 152; 210; 301), while the second pole face (87; 187; 207; 308) is located on an outer circumference (89) of the aerial body (52; 152; 210; 301).

13. Position measuring device according to any of the preceding claims, **characterised in that** the first pole face (86, 87; 186, 187; 206, 207; 307, 308) of the coupling probe (44; 209; 309) is at least partially represented by a radiating body (54; 154) held by the aerial body (52; 152; 210; 301).

14. Position measuring device according to claim 13, **characterised in that** the radiating body (54; 154) is electrically connected to a pole face (86, 87; 186, 187; 206, 207; 307, 308) of the aerial body.

15. Position measuring device according to claim 13 or 14, **characterised in that** the radiating body (54; 154) consists essentially of metal.

16. Position measuring device according to any of the preceding claims, **characterised in that** it represents part of an actuator device (11; 111), in particular of an electric and/or fluidic drive (10; 110), and **in that** the measuring object (46; 446) is an actuator element (14) of the actuator device.

17. Position measuring device according to any of claims 1 to 15, **characterised in that** it represents part of a fluidic, in particular pneumatic, service unit (400), and **in that** it is designed for the quantitative measurement of an additive (403) for the fluid and/or of a separation product from the fluid in a locating chamber of the service unit.

18. Position measuring device according to any of claims 1 to 15, **characterised in that** it represents part of a fluid valve, in particular of a pneumatic valve, and **in that** the measuring object (46; 446) is a valve member of the fluid valve.

19. Method for the production of a position measuring device (40; 140) for determining a distance between a measuring object (46; 446) located in a line structure (45; 445) and a microwave aerial arrangement (43; 143; 200; 300) of the position measuring device by means of microwaves, **characterised by**
- the coating of at least part of a dielectric aerial body (52; 152; 210; 301) forming part of the microwave aerial arrangement (43; 143; 200; 300) with an electrically conductive coating (85; 205; 306) forming a first and a second pole face (86, 87; 186, 187; 206, 207; 307, 308) of a coupling probe (44; 209; 309) of the microwave aerial arrangement, wherein the pole faces (86, 87; 186, 187; 206, 207; 307, 308) are electrically insulated from one another.

20. Method according to claim 19, **characterised by** the extrusion-coating or encapsulating of a radiating body (54; 154) representing at least partially the first pole face 86; 186; 206; 307) of a coupling probe (44; 209; 309) with a dielectric material to produce the aerial body (52; 152; 210; 301), whereupon the aerial body is at least partially coated on the outside to produce the second pole face (87; 187; 207; 308).

## Revendications

1. Dispositif de mesure de position pour la détermination d'une distance entre un objet de mesure (46 ; 446) disposé dans une structure de guidage (45 ; 445) et un ensemble d'antennes micro-ondes (43 ; 143 ; 200 ; 300) du dispositif de mesure de position (40 ; 140) à l'aide de micro-ondes, **caractérisé en ce que** l'ensemble d'antennes micro-ondes comporte un corps d'antenne diélectrique (52 ; 152 ; 210 ; 301) qui est doté, au moins partiellement, d'un revêtement électriquement conducteur (85 ; 205 ; 306) et **en ce que** le revêtement électriquement conducteur forme une première et une seconde surface polarisée (86, 87 ; 186, 187 ; 206, 207 ; 307, 308) d'une sonde de couplage (44; 209; 309) de l'ensemble d'antennes micro-ondes (43 ; 143 ; 200 ; 300) , les surfaces polarisées (86, 87; 186, 187; 206, 207; 307, 308) étant électriquement isolées l'une de l'autre.

2. Dispositif de mesure de position selon la revendication 1, **caractérisé en ce que** la première ou la seconde surface polarisée (86, 87 ; 186, 187 ; 206, 207 ; 307, 308) est reliée électriquement à la structure de guidage (45 ; 445).

3. Dispositif de mesure de position selon la revendication 1 ou 2, **caractérisé en ce que** les distances existant entre la première et la seconde surface polarisée (86, 87 ; 186, 187 ; 206, 207 ; 307, 308) sont sensiblement constantes, en particulier radialement constantes.

4. Dispositif de mesure de position selon l'une des revendications précédentes, **caractérisé en ce que** la première et la seconde surface polarisée (86, 87 ; 186, 187 ; 206, 207 ; 307, 308) sont concentriques l'une par rapport à l'autre.

5. Dispositif de mesure de position selon l'une des revendications précédentes, **caractérisé en ce que** la première surface polarisée (86 ; 186, 206 ; 307) est disposée sur une surface intérieure (88) d'un espace intérieur (83) du corps d'antenne (52 ; 152 ; 210 ; 301) et/ou d'une face frontale (84) du corps d'antenne ou constitue ladite surface intérieure et **en ce que** la seconde surface polarisée (87; 187; 207; 308) est disposée sur la surface extérieure (89) du corps d'antenne (52 ; 152; 210 ; 301) ou la constitue.

6. Dispositif de mesure de position selon la revendication 5, **caractérisé en ce que** l'espace intérieur (83) est évidé ou rempli d'un matériau diélectrique ou électriquement conducteur.

7. Dispositif de mesure de position selon l'une des revendications précédentes, **caractérisé en ce que** la première surface polarisée (86; 186, 206; 307) et/ou la seconde surface polarisée (87 ; 187 ; 207 ; 308) sont dotées au moins partiellement d'une couche d'isolation électrique, vers l'extérieur.

8. Dispositif de mesure de position selon l'une des revendications précédentes, **caractérisé en ce que** le revêtement électriquement conducteur (85 ; 205 ; 306) est réalisé par un procédé de vaporisation physique et/ou chimique, et/ou par galvanisation et/ou par dépôt par laser et/ou par revêtement thermique.

9. Dispositif de mesure de position selon l'une des revendications précédentes, **caractérisé en ce que** le corps d'antenne (52; 152 ; 210 ; 301) est un corps conducteur tridimensionnel.

10. Dispositif de mesure de position selon l'une des revendications précédentes, **caractérisé en ce qu'**une partie du corps d'antenne (52; 152; 210 ; 301) est conformée en conducteur coaxial (194).

11. Dispositif de mesure de position selon l'une des revendications précédentes, **caractérisé en ce que** la première et/ou la seconde surface polarisée (86, 87; 186, 187 ; 206, 207 ; 307, 308) sont reliées avec un conducteur électrique souple (36, 59) de façon mécaniquement découplée au dispositif d'émission micro-ondes et/ou au dispositif de réception micro-ondes (48).

12. Dispositif de mesure de position selon l'une des revendications précédentes, **caractérisé en ce que** la première surface polarisée (86 ; 186, 206 ; 307) est disposée, au moins partiellement, sur une face frontale (84) du corps d'antenne (52 ; 152 ; 210 ; 301), orientée dans le sens d'émission et/ou de réception de la sonde de couplage (44 ; 209 ; 309) et la seconde surface polarisée (87; 187 ; 207 ; 308) est disposée sur la périphérie extérieure (89) du corps d'antenne (52 ; 152 ; 210 ; 301).

13. Dispositif de mesure de position selon l'une des revendications précédentes, **caractérisé en ce que** la première surface polarisée (86, 87 ; 186, 187 ; 206, 207 ; 307, 308) de la sonde de couplage (44 ; 209 ; 309) est constituée au moins partiellement par un corps de rayonnement (54; 154) maintenu par le corps d'antenne (52; 152 ; 210; 301).

14. Dispositif de mesure de position selon la revendication 13, **caractérisé en ce que** le corps de rayonnement (54 ; 154) est relié électriquement à une surface polarisée (86, 87 ; 186, 187 ; 206, 207 ; 307, 308) du corps d'antenne.

15. Dispositif de mesure de position selon la revendication 13 ou 14, **caractérisé en ce que** le corps de rayonnement (54 ; 154) est principalement constitué de métal.

16. Dispositif de mesure de position selon l'une des revendications précédentes, **caractérisé en ce qu'**il forme un élément constitutif d'un dispositif actionneur (11; 111), en particulier d'un entraînement électrique et/ou d'un entraînement fluidique (10 ; 110) et **en ce que** l'objet de mesure (46 ; 446) est un élément actionneur (14) du dispositif actionneur.

17. Dispositif de mesure de position selon l'une des revendications 1 à 15, **caractérisé en ce qu'**il forme un élément constitutif d'un appareil de maintenance (400) fluidique, en particulier pneumatique et **en ce qu'**il est conçu pour mesurer la quantité d'un additif (403) pour le fluide et/ou un produit d'élimination extrait du fluide dans une chambre de réception de l'appareil de maintenance.

18. Dispositif de mesure de position selon l'une des revendications 1 à 15, **caractérisé en ce qu'**il forme un élément constitutif d'une vanne fluidique, en particulier d'une vanne pneumatique et **en ce que** l'objet de mesure (46 ; 446) est un élément de vanne de la vanne fluidique.

19. Procédé de fabrication d'un dispositif de mesure de position (40; 140) pour la détermination d'une distance entre un objet de mesure (46 ; 446) disposé dans une structure de guidage (45 ; 445) et un ensemble d'antennes micro-ondes (43 ; 143 ; 200; 300) du dispositif de mesure de position à l'aide de micro-ondes, **caractérisé par** :
- une couverture, au moins d'une partie d'un corps d'antenne diélectrique (52 ; 152 ; 210 ; 301) qui constitue une partie de l'ensemble d'antennes micro-ondes (43 ; 143 ; 200 ; 300), au moyen d'un revêtement électriquement conducteur (85 ; 205 ; 306), qui constitue une première et une seconde surface polarisée (86, 87 ; 186, 187 ; 206, 207 ; 307, 308) d'une sonde de couplage (44 ; 209 ; 309) de l'ensemble d'antennes micro-ondes, les surfaces polarisées (86 ; 87 ; 186, 187 ; 206, 207 ; 307, 308) étant électriquement isolées l'une de l'autre.

20. Procédé selon la revendication 19, **caractérisé par** un surmoulage ou un enrobage d'un corps de rayonnement (54 ; 154) formant au moins partiellement la première surface polarisée (86; 186; 206; 307) de la sonde de couplage (44 ; 209; 309), par un matériau diélectrique pour la formation du corps d'antenne (52 ; 152 ; 210 ; 301), le corps de l'antenne étant ensuite revêtu au moins partiellement côté extérieur pour la formation de la seconde surface polarisée (87; 187; 207; 308).
